# EUROPÄISCHE PATENTANMELDUNG

(11) **EP 0 832 802 A2**
(43) Veröffentlichungstag der Anmeldung: **01.04.1998**
(21) Anmeldenummer: 97116599.8
(22) Anmeldetag: 24.09.1997
(51) Int. Cl.: B60T 13/16, B60T 8/32

(54) **Vorrichtung zur Erzeugung von Bremsdruck mittels einer Druckerzeugungsvorrichtung**

(30) Priorität: 30.09.1996 DE 19640456
(71) Anmelder: Daimler-Benz Aktiengesellschaft, 70546 Stuttgart (DE)
(72) Erfinder: Diebel, Michael, 73730 Esslingen (DE); Freitag, Rainer, 73277 Owen (DE); Hartl, Marthias, 71394 Kernen (DE); Huber, Wilfried, 75395 Ostelsheim (DE); Müller, Armin, 75391 Gechingen (DE); Platte, Andreas, 73770 Denkendorf (DE); Tröster, Harry, Dr., 71732 Tamm (DE); Zimmer, Richard, 70734 Fellbach (DE)

(57) **Zusammenfassung**

Die vorliegende Erfindung betrifft eine Vorrichtung zur Erzeugung von Bremsdruck mittels einer Druckerzeugungsvorrichtung (1), wobei mittels der Druckerzeugungsvorrichtung Volumen in die Kammer des Hauptbremszylinders (2) des Kraftfahrzeuges gefördert wird und wobei die Druckerzeugungsvorrichtung (1) eine Pumpe ist, deren aufgebauter Druck auch von wenigstens einem weiteren Aggregat, insbesondere einer hilfskraftunterstützten Lenkung, verwendet wird.

Mittels der Pumpe (1) ist Volumen in die Kammer des Hauptbremszylinders des Kraftfahrzeuges förderbar, indem die Zulaufleitung zur Kammer des Hauptbremszylinders an die Rücklaufleitung des wenigstens einen weiteren Aggregates (3) gekoppelt ist, die das wenigstens eine weitere Aggregrat (3) mit dem Flüssigkeitsvorratsbehälter (6) verbindet, wobei zwischen der Ankopplung der Zulaufleitung (4) zur Kammer des Hauptbremszylinders und dem Flüssigkeitsvorratsbehälter ein zwischen wenigstens zwei Einstellungsmöglichkeiten beschaltbares Drosselelement (7) positioniert ist.

Ebenso kann ein als 3/2- oder als 4/2-Wegeventil ausgebildetes Aufteilelement vorhanden sein, über das sowohl das Bremssystem als auch das wenigstens eine weitere Aggregat unmittelbar über die Pumpe mit Druck versorgt werden können.

## Beschreibung

Die vorliegende Erfindung betrifft eine Vorrichtung zur Erzeugung von Bremsdruck mittels einer Druckerzeugungsvorrichtung.

Es sind derartige Vorrichtungen bekannt (DE 38 06 227 C2 sowie DE 24 40 320 A1), bei denen die Erzeugung von Bremsdruck durch Unterstützung einer Pumpe erfolgt, wobei neben der Unterstützung der Bremswirkung von der Pumpe weiterhin eine hilfskraftunterstützte Lenkung mit Druck versorgt wird. Es ist dabei in den beiden bekannten Vorrichtungen jeweils ein mechanisch wirkendes Stellglied als Aufteilelement vorgesehen, mittels dem eine Aufteilung und weitgehende Konstanthaltung des Druckes in den beiden Kreisen erfolgen soll.

Es ist weiterhin eine Vorrichtung bekannt (DE 43 16 339 A1), bei der eine Pumpe vorgesehen ist, mittels der eine hilfskraftunterstützte Lenkung sowie wenigstens ein weiteres Aggregat, das in dem dort gezeigten Ausführungsbeispiel eine hilfskraftunterstützte Kupplung ist, mit Druck versorgt werden. Die Aggregate können jeweils (jedoch nicht gleichzeitig) über ein 3/2-Wegeventil mit der Pumpe verbunden werden. Es ist deswegen notwendig, für das wenigstens eine weitere Aggregat einen Druckspeicher vorzusehen, um für das wenigstens eine weitere Aggregat eine Druckreserve zu haben, wenn das 3/2-Wegeventil in die Stellung geschaltet ist, in der die hilfskraftunterstützte Lenkung über die Pumpe mit Druck versorgt wird und deswegen das wenigstens eine weitere Aggregat zu diesem Zeitpunkt nicht unmittelbar über die Pumpe versorgt werden kann.

Es ist weiterhin eine Vorrichtung bekannt (DE 43 35 769 C1), bei der Bremsdruck-Stellglieder vorgesehen sind. Mittels dieser Bremsdruck-Stellglieder kann unabhängig von einer Bremsbetätigung durch den Fahrzeugführer ein Bremsdruckaufbau in den Radbremszylindern erfolgen. Dabei sind mehrere Bremsdruck-Stellglieder vorgesehen, die den einzelnen Rädern des Fahrzeuges zugeordnet sind.

Demgegenüber ist es die Aufgabe der vorliegenden Erfindung, für den Aufbau von Bremsdruck den Bauteileaufwand zu reduzieren und dabei wenigstens ein weiteres Aggregat ebenfalls mit minimalem Bauteileaufwand mit Druck zu versorgen.

Diese Aufgabe wird erfindungsgemäß zum einen dadurch gelöst, daß mittels der Pumpe Volumen in die Kammer des Hauptbremszylinders des Kraftfahrzeuges förderbar ist, indem die Zulaufleitung zur Kammer des Hauptbremszylinders an die Rücklaufleitung des wenigstens einen weiteren Aggregates gekoppelt ist, die das wenigstens eine weitere Aggregrat mit dem Flüssigkeitsvorratsbehälter verbindet, wobei zwischen der Ankopplung der Zulaufleitung zur Kammer des Hauptbremszylinders und dem Flüssigkeitsvorratsbehälter ein zwischen wenigstens zwei Einstellungsmöglichkeiten beschaltbares Drosselelement positioniert ist.

Bei dieser Ausgestaltung der Vorrichtung besteht nur ein geringer Bauteilebedarf, wobei die einzelnen Bauteile in ihrem Aufbau einfach ausgebildet sind.

Bei der Ausgestaltung der Vorrichtung nach Anspruch 2 weist das Drosselelement mehr als zwei Einstellmöglichkeiten auf und ist zumindest entsprechend dem Wert eines Pedalwertgebers einstellbar.

Dadurch ist eine genauere Einstellung des Bremsdruckes möglich. Diese Einstellung kann dabei in Abhängigkeit von dem durch den Fahrzeugführer vorgegebenen Pedalweg vorgenommen werden oder auch durch einen Eingriff in die Bremse, der beispielsweise in Abhängigkeit vom Fahrzustand abgeleitet wird. Ein solcher Eingriff kann dann auch unabhängig vom Pedalweg des Bremspedales vorgenommen werden, der vom Fahrzeugführer vorgegeben wird.

Bei der Vorrichtung nach Anspruch 3 ist das Drosselelement kontinuierlich einstellbar. Dadurch ist eine besonders feinstufige Einstellung des in die Kammer des Hauptbremszylinders geforderten Volumens - und damit also des Bremsdruckes - möglich.

Bei der Ausgestaltung der Vorrichtung nach Anspruch 4 weist das Drosselelement eine Einstellung ohne Drosselung sowie eine weitere Einstellung mit einer bestimmten Drosselung auf. Weiterhin ist zwischen der Ankopplung der Zulaufleitung zur Kammer des Hauptbremszylinders an die Rückaufleitung des wenigstens einen weiteren Aggregates und dem Hauptbremszylinder in der Zulaufleitung zur Kammer des Hauptbremszylinders ein Ventil angeordnet, das einen Druckabbau aus der Kammer des Hauptbremszylinders in die Rücklaufleitung des wenigstens einen weiteren Aggregates verhindert.

Dieses Ventil kann beispielsweise ein in Strömungsrichtung zur Ankopplung schließendes Rückschlagventil sein. Ebenso kann dieses Ventil auch beispielsweise durch ein 2/2-Wegeventil realisiert werden, das in seiner einen Schaltstellung die beiden Anschlüsse gegeneinander sperrt und in seiner anderen Schaltstellung die beiden Anschlüsse miteinander verbindet. Die Funktion des Ventiles resultiert in diesem Falle aus der Beschaltung des 2/2-Wegeventiles. Weiterhin ist ein Verteilelement vorgesehen, über das die Kammer des Hauptbremszylinders mittels einer verstellbaren Drosselung mit einem Flüssigkeitsvorratsbehälter verbindbar ist. Dadurch ist das in die Kammer geförderte Volumen einstellbar. Weiterhin kann dadurch der Druck in der Kammer des Hauptbremszylinders abgebaut werden, wenn der Bremsvorgang beendet worden ist.

Durch diesen Aufbau der Vorrichtung ist im Falle des Abbaus des Bremsdruckes, d.h. der Rückförderung des Volumens aus dem Hauptbremszylinder in den Flüssigkeitsbehälter, der Hauptbremszylinder von dem weiteren Aggregat entkoppelt.

Bei der Ausgestaltung der Vorrichtung nach Anspruch 5 ist die verstellbare Drosselung zumindest entsprechend dem Wert eines Pedalwertgebers verstellbar.

Diese Verstellung kann dabei in Abhängigkeit von dem durch den Fahrzeugführer vorgegebenen Pedalweg vorgenommen werden oder auch durch einen Eingriff in die Bremse, der beispielsweise in Abhängigkeit vom Fahrzustand abgeleitet wird. Ein solcher Eingriff kann dabei unabhängig vom Pedalweg des Bremspedales vorgenommen werden, der vom Fahrzeugführer vorgegeben wird.

Bei der Ausgestaltung der Vorrichtung nach Anspruch 6 besteht das Drosselelement aus einem 2/2-Wegeventil, das zum einen in ungedrosselte Durchlaßstellung und zum anderen in Sperrstellung schaltbar ist, wobei diesem 2/2-Wegeventil eine Drossel mit konstanter Einstellung parallel geschaltet ist.

Durch diesen Aufbau des Drosselelementes ist eine einfache Ausführungsform gegeben, mittels der die zwei Zustände der Drosselelementes geschaltet werden können.

Bei einer anderen erfindungsgemäßen Ausgestaltung einer Vorrichtung nach Anspruch 7 ist mittels der Pumpe (1) Volumen in die Kammer des Hauptbremszylinders (2) des Kraftfahrzeuges förderbar. Das Aufteilelement (12) wird durch ein 3/2-Wegeventil oder ein 4/2-Wegeventil (13) gebildet, das in seiner einen Stellung (14) die Druckseite der Pumpe nur mit dem wenigstens einen weiteren Aggregat (3) verbindet und das in seiner anderen Stellung (15) sowohl das wenigstens eine weitere Aggregat (3) als auch die Kammer des Hauptbremszylinders (2) mit der Druckseite der Pumpe (1) verbindet.

Dadurch wird die Dynamik der Förderung von Volumen in die Kammer des Hauptbremszylinders verbessert, da der zur Förderung des Volumens benötigte Druck direkt von der Druckseite der Pumpe abgeleitet wird, wobei die Druckaufteilung auf eines der beiden Systeme bzw. beide Systeme gleichzeitig mit einfach ansteuerbaren Elementen realisiert ist.

Vorteilhaft wird dabei weiterhin gemäß Anspruch 8 in der Zulaufleitung zur Kammer des Hauptbremszylinders ein Einstellelement positioniert, mittels dem der Zufluß zum Hauptbremszylinder einstellbar ist und mittels dem die Kammer des Hauptbremszylinders mit dem Flüssigkeitsvorratsbehälter verbindbar ist.

Vorteilhaft ist dabei im Falle des Abbaus von Bremsdruck der Rückfluß aus der Kammer des Hauptbremszylinders entkoppelt von der Rücklaufleitung des wenigstens einen weiteren Aggregates.

Bei einer vorteilhaften Ausgestaltung einer Vorrichtung nach Anspruch 9 ist in der Rücklaufleitung des wenigstens einen weiteren Aggregates zum Flüssigkeitsbehälter ein wenigstens zwischen zwei Werten einstellbares Drosselelement vorhanden, wobei in Richtung zum Flüssigkeitsbehälter vor diesem Drosselelement eine Verbindungsleitung zur Zulaufleitung zur Kammer des Hauptbremszylinders abzweigt und wobei in dieser Verbindungsleitung ein Ventil angeordnet ist, das einen Druckabbau aus der Kammer des Hauptbremszylinders in die Rücklaufleitung des wenigstens einen weiteren Aggregates verhindert. Dieses Ventil kann dabei ein Rückschlagventil sein, das in Strömungsrichtung zum Drosselelement schließt, oder ein 2/2-Wegeventil wie dies im Zusammenhang mit Anspruch 5 bereits erläutert worden ist.

Vorteilhaft kann dabei das Drosselelement auf einen Durchflußwert ohne jegliche Drosselung und auf einen Wert eingestellt werden, bei dem sich ein Druck von einigen bar, beispielsweise etwa 5 bar, in Strömungsrichtung vor dem Drosselelement einstellt. Wenn das Drosselelement in diese letzte Stellung geschaltet ist, kann vorteilhaft ein bestimmtes Volumen in die Kammer des Hauptbremszylinders gefördert werden. Dieses Volumen entspricht dann dem Druck von beispielsweise 5 bar. Wenn ein größeres Volumen in der Kammer des Hauptbremszylinders benötigt wird, kann dann durch eine entsprechende Schaltung des Aufteilelementes die Druckseite der Pumpe mit der Kammer des Hauptbremszylinders verbunden werden.

Bei einer vorteilhaften Ausgestaltung der Vorrichtung nach Anspruch 10 weist das Fahrzeug ein Antiblockiersystem auf. Mittels der Möglichkeiten zur Regelung des Bremsdruckes der einzelnen Räder kann dann auch mit einer Vorrichtung, bei der Volumen in die Kammer des Hauptbremszylinders gefördert wird, der Bremsdruck an den einzelnen Rädern individuell eingestellt werden. Damit ist dann auch mit einer solchen Vorrichtung ein Aufbau von Bremsdruck lediglich an einzelnen Rädern des Fahrzeuges möglich, obwohl grundsätzlich Bremsdruck an allen Rädern des Fahrzeuges aufgebaut wird.

Insbesondere wenn das Aggregat gemäß der Ausgestaltung nach Anspruch 11 eine hilfskraftunterstützte Lenkung ist, ergibt sich dabei als Vorteil, daß die hohen Anforderungen, die hinsichtlich der Betriebssicherheit sowohl der Bremsanlage als auch der Lenkung an die Pumpe zu stellen sind, durch die gemeinsame Verwendung derselben Pumpe nur einmal erfüllt werden müssen. Dadurch wird der Aufwand an Bauteilen auch im Hinblick auf deren Kosten reduziert.

Durch die erfindungsgemäß vorgeschlagenen Ausgestaltungen der Vorrichtungen ergeben sich Systeme, die aus einfach ansteuerbaren und vergleichsweise einfach und damit auch kostengünstig herstellbaren Bauteilen bestehen. Dies zeigt sich insbesondere gegenüber dem Stand der Technik, aus dem es lediglich bekannt war, bei gleichzeitiger Ansteuerung sowohl der Bremse als auch des wenigstens einen weiteren Aggregates ein vergleichsweise kompliziert aufgebautes mechanisches Aufteilelement vorzusehen, dessen Einstellung beispielsweise auch nicht adaptiert werden kann, wie dies bei den erfindungsgemäß vorgesehenen elektrisch ansteuerbaren Bauteilen der Fall ist. Bei der aus dem Stand der Technik bekannten Anordnung, bei der einfach ansteuerbare Bauelemente verwendet wurden, ergab sich in Folge, daß die Bremse sowie das wenigstens eine weitere Aggregat nicht gleichzeitig über die Pumpe ansteuerbar waren, was insbesondere bei sicherheitskritischen Funktionen wie einer hilfskraftunterstützten Lenkung als Lösung nicht in Frage kommen dürfte, um zu vermeiden, daß aufgrund der Betriebsbedingungen entweder die Bremse oder die hilfskraftunterstützte Lenkung nicht funktionieren.

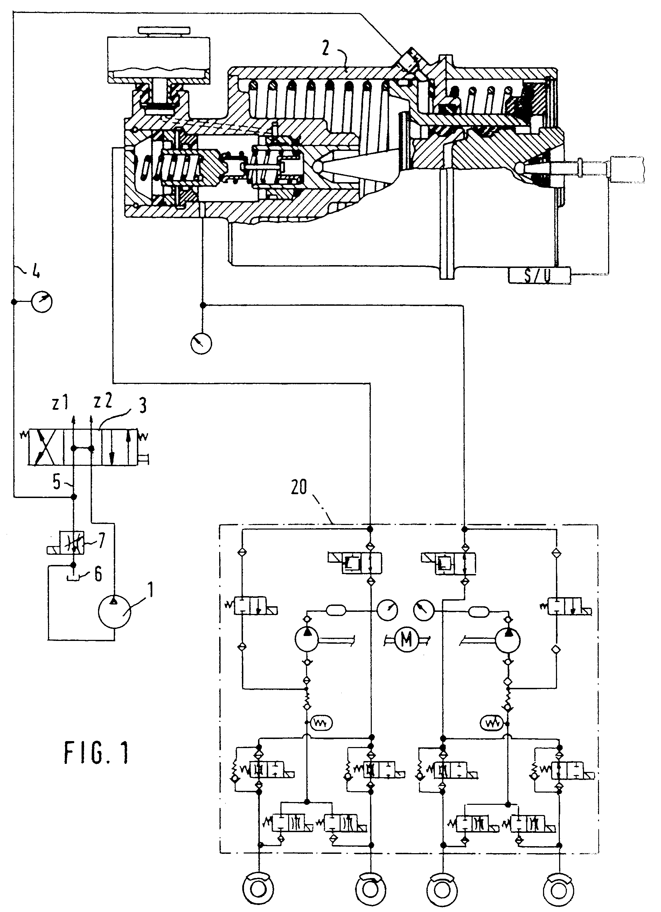

Ein Ausführungsbeispiel der Erfindung ist in der Zeichnung dargstellt. Es zeigen dabei die Figuren 1 bis 4 verschiedene Ausgestaltungen von erfindungsgemäßen Vorrichtungen.

Fig. 1 zeigt ein erstes Beispiel einer Ausgestaltung einer erfindungsgemäßen Vorrichtung. Es ist dabei eine Pumpe 1 dargestellt, die Flüssigkeit aus einem Flüssigkeitsvorratsbehälter 6 fördert. Die Druckseite der Pumpe ist mit einem Anschluß eines 4/3-Wegeventiles verbunden, das Teil eines weiteren Aggregates 3 ist, daß hier eine nicht im einzelnen dargestellte hilfskraftunterstützte Lenkung ist. Die hilfskraftunterstützte Lenkung 3 weist weiterhin eine Rücklaufleitung 5 auf, die über ein Drosselelement 7 in den Flüssigkeitsvorratsbehälter 6 mündet. Das 4/3-Wegeventil der hilfskraftunterstützten Lenkung 3 weist weiterhin zwei Anschlüsse z1 und z2 auf, die mit jeweils einer Kammer eines nicht näher dargestellten Zylinders verbunden sind, wobei diese Kammern durch einen Kolben getrennt sind. Je nachdem in welche der beiden Kammern dabei Flüssigkeit gefördert wird, wird eine Lenkbewegung in linker bzw. in rechter Richtung unterstützt.

In der in Fig. 1 gezeigten neutralen Stellung des 4/3-Wegeventiles sind Druckseite der Pumpe 1 und der Flüssigkeitsvorratsbehälter 6 - und damit die Saugseite der Pumpe 1 - hydraulisch kurzgeschlossen. Durch eine entsprechende Ansteuerung des 4/3-Wegeventiles wird dann eine der Kammern des Zylinders mit der Druckseite der Pumpe 1 verbunden und die jeweils andere Kammer mit der Rücklaufleitung 5. In Abhängigkeit von der Ansteuerung wird also eine Lenkbewegung in linker bzw. in rechter Richtung unterstützt.

Wenn kein Bremsdruck benötigt wird, ist das einstellbare Drosselelement 7 so eingestellt, daß keine Drosselung bewirkt wird. Die Flüssigkeit kann also in den Flüssigkeitsvorratsbehälter 6 zurückfließen, ohne daß das einstellbare Drosselelement 7 einen Widerstand entgegensetzt.

Wenn das Drosselelement 7 so eingestellt wird, daß sich vor dem Drosselelement 7 ein Druck aufbaut, wird dieser Druck - und damit ein bestimmtes gefordertes Volumen über die Zulaufleitung 4 zur Kammer des Hauptbremszylinders 2 diesem Hauptbremszylinder 2 zugeführt. Wenn das Drosselelement 7 wieder geöffnet wird, wird der Druck abgebaut, indem die Flüssigkeit aus der Kammer des Hauptbremszylinders 2 über die Zulaufleitung 4 zur Kammer des Hauptbremszylinders 2 sowie das Drosselelement 7 in den Flüssigkeitsvorratsbehälter 6 zurückfließt.

Die Einstellung des Drosselelementes 7 kann dabei beispielsweise in Abhängigkeit von dem Pedalweg vorgenommen werden, der von dem Fahrzeugführer am Bremspedal des Kraftfahrzeuges vorgegeben wird. Das Drosselelement 7 kann dabei kontinuierlich einstellbar sein. Eine solche kontinuierliche Einstellung des Drosselelementes 7 kann auch erreicht werden, indem die Ansteuerzeit des Drosselelementes 7 variiert wird, wenn das Drosselelement 7 zwischen zwei unterschiedlichen Werten einstellbar ist. Über das Verhältnis der Zeitdauern, zu denen das Drosselelement 7 dann in der Stellung "Drosselung" steht zu den Zeitdauern, zu denen das Drosselelement 7 in der Stellung "ungedrosselt" steht, ergibt sich dann der entsprechende Wert der Drosselung.

Bei der Regelung bzw. Steuerung des Bremsdruckes ist also die Stellung des einstellbaren Drosselelementes 7 die Stellgröße. Die Führungsgröße kann dabei aus dem zurückgelegten Weg des Bremspedales und/oder Fahrbedingungen bzw. Fahrzustanden des Kraftfahrzeuges abgeleitet werden. Anhand festgelegter Kriterien wird mittels der Fürhungsgröße aufgrund von Kennlinien und/oder Berechnungsformeln ein Sollwert für den Radbremsdruck ermittelt. Aus dem Solldruck wird dann unter Berücksichtigung der Übersetzungen (im Hauptbremszylinder 2, zwischen den Leitungen und dem Hauptbremszylinder 2) der entsprechende Wert für die Einstellung des Drosselelementes 7 ermittelt. Dieser Wert kann dabei beispielsweise die Ansteuerungszeit des Drosselelementes 7 sein.

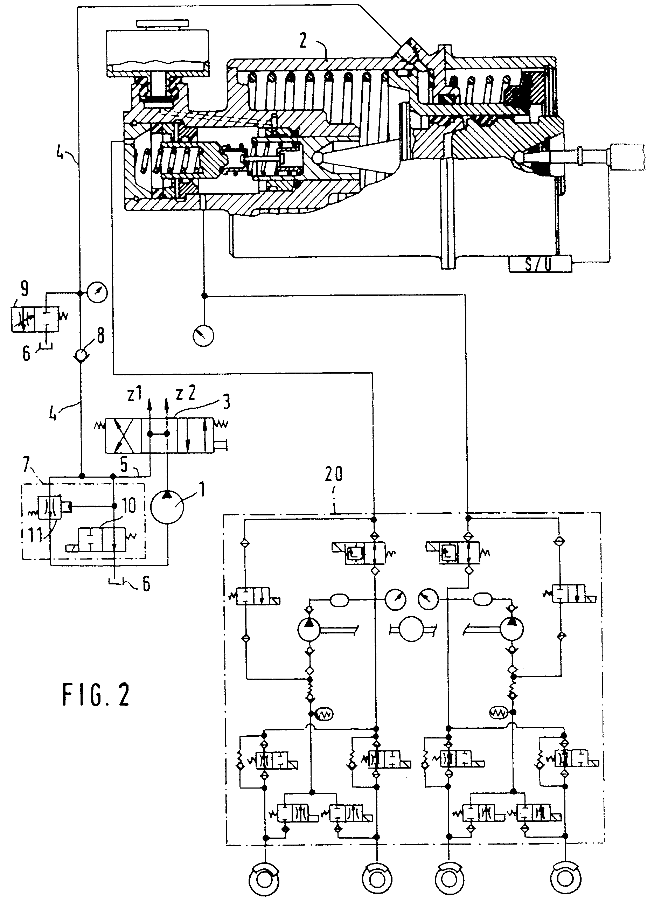

Fig. 2 zeigt eine andere Ausgestaltung einer erfindungsgemäßen Vorrichtung.

Das Drosselelement 7 in der Rücklaufleitung 5 der hilfskraftunterstützten Lenkung ist hier im einzelnen dargestellt als ein 2/2-Wegeventil 10, das schaltbar ist zwischen einer Stellung, die einen ungedrosselten Durchfluß ermöglicht, und einer Stellung, in der das 2/2-Wegeventil 10 sperrt. Diesem 2/2-Wegeventil 10 ist eine Drossel 11 parallel geschaltet, die einen festen Wert der Drosselung aufweist.

Wenn das 2/2-Wegeventil 10 in der in Fig. 2 gezeigten Stellung steht, ist die Rücklaufleitung 5 der hilfskraftunterstützten Lenkung ohne Drosselung an den Flüssigkeitsvorratsbehälter 6 angebunden. Es kommt dann also zu keinem Aufbau von Bremsdruck. Wenn das 2/2-Wegeventil 10 angesteuert wird, sperrt dieses 2/2-Wegeventil die Rücklaufleitung 5 der hilfskraftunterstützten Lenkung von dem Flüssigkeitsvorratsbehälter 6 ab. Die Rücklaufleitung 5 der hilfskraftunterstützten Lenkung ist also nur noch über die Drossel 11 mit dem Flüssigkeitsvorratsbehälter 6 verbunden. Dadurch baut sich also in der Rücklaufleitung 5 ein bestimmter Druck auf, der über die Zulaufleitung 4 zur Kammer des Hauptbremszylinders 2 weitergegeben werden kann.

Für einen Druckaufbau in dieser Richtung ist das Rückschlagventil 8 in Durchlaßrichtung geschaltet.

Weiterhin ist als Abzweig von der Zulaufleitung 4 zur Kammer des Hauptbremszylinders 2 ein Verteilelement 9 vorgesehen, das hier wiederum als 2/2-Wegeventil dargestellt ist. In seiner einen Schaltstellung ist dieses 2/2-Wegeventil in Sperrichtung gezeigt. Diese Stellung ist in Fig. 2 zu sehen.

In dieser Stellung wird also der Druck, der in der Rücklaufleitung 5 der hilfskraftunterstützten Lenkung ansteht, unvermindert in die Kammer des Hauptbremszylinders 2 weitergeleitet.

Wenn das als 2/2-Wegeventil ausgebildete Verteilelement 9 in seine andere Schaltstellung geschaltet wird, wird die Zulaufleitung 4 zur Kammer des Hauptbremszylinders 2 - und damit auch die Kammer des Hauptbremszylinders 2 - mit dem Flüssigkeitsvorratsbehälter 6 verbunden. In dieser Schaltstellung ist die Drosselung weiterhin verstellbar. Über die Verstellung der Drosselung, mit der die Zulaufleitung 4 zur Kammer des Hauptbremszylinders 2 mit dem Flüssigkeitsvorratsbehälter 6 verbunden ist, ist also der Druck in der Kammer des Hauptbremszylinders 2 verstellbar. Es erfolgt dabei eine Aufteilung des geförderten Volumens in einen Teil, der in die Kammer des Hauptbremszylinders 2 fließt und einen anderen Teil, der in den Flüssigkeitsvorratsbehälter 6 fließt. Es wird also zum einen über dieses Verteilelement 9 sowohl in der Phase des Druckaufbaus in der Kammer des Hauptbremszylinders 2 das in die Kammer des Hauptbremszylinders 2 geförderte Volumen verstellt als auch in der Phase des Druckabbaus der Druck in der Kammer des Hauptbremszylinders 2 abgebaut. In dieser Schaltstellung des Verteilelementes 9 sperrt das Rückschlagventil 8 die Kammer des Hauptbremszylinders 2 von der Rücklaufleitung 5 der hilfskraftunterstützten Lenkung ab.

Stellgrößen sind bei der Ausgestaltung der Vorrichtung nach Fig. 2 zum einen das Ansteuersignal des 2/2-Wegeventiles 10 als auch die Verstellung des Verteilelementes 9. Das 2/2-Wegeventil 10 wird dabei angesteuert sobald erkannt wird, daß ein Bremsdruck aufgebaut werden soll.

Dies kann bei einer von dem Fahrzeugführer eingeleiteten Bremsung beispielsweise anhand des Bremslichtsignales erfolgen. Die Verstellung des Verteilelementes 9 kann dabei beispielsweise wiederum in Abhängigkeit von dem zurückgelegten Weg des Bremspedales abgeleitet werden.

Ebenso können aber auch hier die beiden Stellgrößen alternativ oder zusätzlich in Abhängigkeit von den Fahrbedingungen und/oder dem Fährzustand ermittelt werden.

Vorteilhaft zeigt sich bei der Ausgestaltung der Vorrichtung nach Figur 2, daß der Abbau des Druckes in der Kammer des Hauptbremszylinders 2 keinen Einfluß auf die hilfskraftunterstützte Lenkung hat.

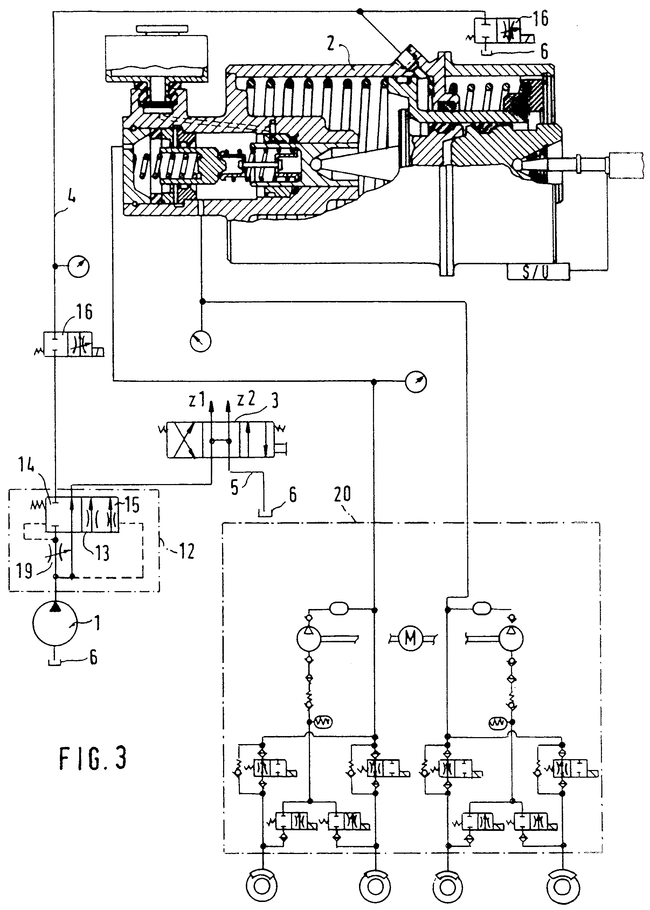

Fig. 3 zeigt eine weitere Ausgestaltung der erfindungsgemäßen Vorrichtung. Dabei ist auf der Druckseite der Pumpe 1 ein Aufteilelement 12 vorgesehen, das in der in Fig. 3 gezeigten Ausführungsform im wesentlichen aus einem 4/2-Wegeventil 13 besteht. Dieses 4/2-Wegeventil 13 verteilt das von der Pumpe 1 geförderte Volumen in die Kammer des Hauptbremszylinders 2 sowie zu einer hilfskraftunterstützten Lenkung.

In der in Fig. 3 gezeigten Stellung 14 des 4/2-Wegeventiles 13 ist nur die hilfskrauunterstützte Lenkung mit der Druckseite der Pumpe 1 verbunden.

Wenn Bremsdruck aufgebaut werden soll, so wird das 4/2-Wegeventil 13 angesteuert. Das 4/2-Wegeventil 13 schaltet dann um in die Stellung 15. In dieser Stellung sind sowohl die hilfskraftunterstützte Lenkung als auch die Zulaufleitung 4 zur Kammer des Hauptbremszylinders 2 mit der Druckseite der Pumpe 1 verbunden. Dabei ist weiterhin eine Drossel 19 vorgesehen, mittels deren Auslegung bzw. Einstellung eine Anpassung der Verteilung des geförderten Volumens auf die hilfskraftunterstützte Lenkung und die Kammer des Hauptbremszylinders 2 vorgenommen werden kann. Wenn diese Drossel 19 anders positioniert wird oder die Aufteilung des geförderten Volumens allein durch die Auslegung des Zweiwegeventiles 13 vorgenommen wird, kann anstelle des 4/2-Wegeventiles auch ein 3/2-Wegeventil verwendet werden. Von der Druckseite der Pumpe zum Anschluß an das Zweiwegeventil 13 ist dann nur eine Zuleitung notwendig.

Wenn das 4/2-Wegeventil in seine andere Schaltstellung 15 geschaltet wird, erfolgt eine entsprechende Aufteilung des von der Pumpe 1 geförderten Volumens.

Die Einstellung des in die Kammer des Hauptbremszylinders 2 geförderten Volumens erfolgt dabei mittels des Einstellelementes 16, das in dem in Fig. 3 gezeigten Ausführungsbeispiel aus zwei 2/2-Wegeventilen besteht. Das 2/2-Wegeventil, das mit dem Flüssigkeitsvorratsbehälter 6 verbunden ist, entspricht dabei in seiner Anordnung und seinem Aufbau dem Verteilelement 9, das im Zusammenhang mit der Figur 2 bereits erläutert worden ist. Zusätzlich ist jedoch im Ausführungsbeispiel der Fig. 3 ein weiteres 2/2-Wegeventil unmittelbar in die Zulaufleitung 4 zur Kammer des Hauptbremszylinders 2 geschaltet. Dieses 2/2-Wegeventil ist in seiner einen Schaltstellung in Sperrung geschaltet. In seiner anderen Schaltstellung ist dieses 2/2-Wegeventil in einer Durchlaßstellung geschaltet, bei der die Drosselung einstellbar ist. Dieses 2/2-Wegeventil kann im Prinzip entfallen. Die Funktionsweise und Beschaltung des anderen 2/2-Wegeventiles, das mit dem Flüssigkeitsvorratsbehälter 6 verbunden ist, entspricht dann dem Verteilelement 9 entsprechend den Erläuterungen zur Figur 2. Bei Verwendung des weiteren 2/2-Wegeventiles wird über dieses weitere 2/2-Wegeventil die Strömung von Volumen eingestellt, indem schon der Zufluß in der Zulaufleitung 4 zur Kammer des Hauptbremszylinders entsprechend eingestellt wird.

Es ist selbstverständlich möglich, anstelle des dargestellten Einstellelementes 16, das aus den beiden 2/2-Wegeventilen besteht, andere Ausführungsformen vorzusehen, wie beispielsweise entsprechend dem Verteilelement 9 der Fig. 2. Ebenso kann ein derartiges Einstellelement 16 durch ein einziges 3/3-Wegeventil gebildet werden, dessen erster Anschluß mit der Druckquelle verbunden ist, dessen zweiter Anschluß mit dem Flüssigkeitsvorratsbehälter 6 verbunden ist und dessen dritter Anschluß über die Zulaufleitung 4 mit der Kammer des Hauptbremszylinders 2 verbunden ist. In den drei Schaltstellungen des 3/3-Wegeventiles ist dann entweder der erste Anschluß über eine verstellbare Drosselung mit dem dritten Anschluß verbunden, oder der zweite Anschluß über eine verstellbare Drosselung mit dem dritten Anschluß oder es sind alle Anschlüsse gegeneinander gesperrt.

Wenn ein Bremsdruck aufgebaut werden soll, wird zunächst das Aufteilelement 12 angesteuert. Die weitere Einstellung wird dann mit dem Einstellelement 16 vorgenommen.

Die Kriterien für die Bestimmung der Stellgrößen können dabei abgeleitet werden, wie dies im Zusammenhang mit Fig. 2 erläutert worden ist.

Bei der Ausgestaltung nach Fig. 3 erweist es sich als vorteilhaft, daß der Druckaufbau in der Kammer des Hauptbremszylinders 2 direkt von der Druckseite der Pumpe 1 erfolgt.

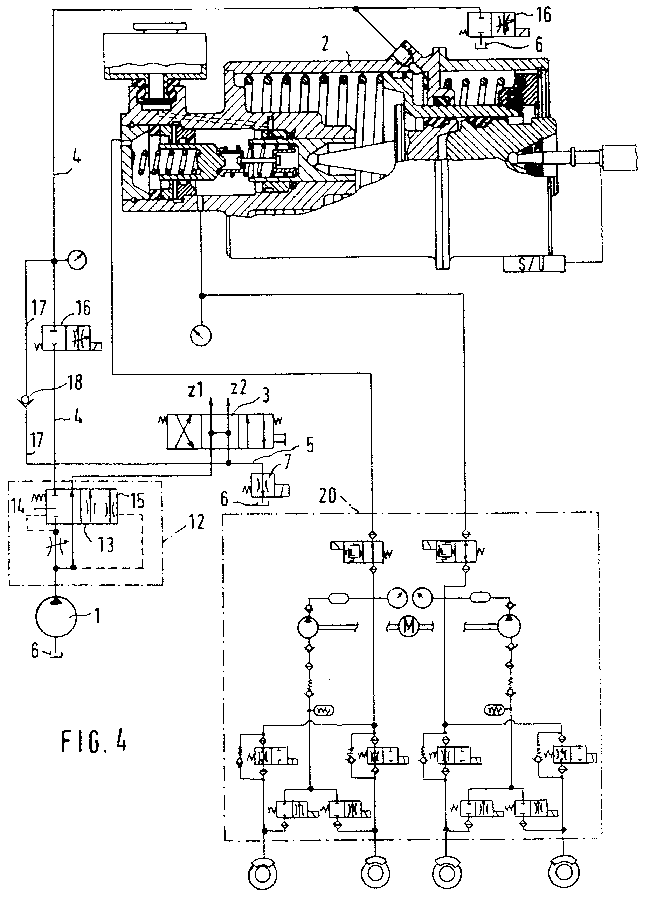

Fig. 4 zeigt eine Abwandlung der Vorrichtung nach Anspruch 3, bei der die Zulaufleitung 4 zur Kammer des Hauptbremszylinders 2 über eine Verbindungsleitung 17 mit der Rücklaufleitung 5 der hilfskraftunterstützten Lenkung verbunden ist. In der Rücklaufleitung 5 der hilfskraftunterstützten Lenkung ist weiterhin ein Drosselelement 7 vorgesehen, dessen Wert der Drosselung zwischen zwei Werten eingestellt werden kann. Bei der einen Einstellung liegt dabei keine Drosselung vor, bei der anderen Einstellung besteht vor dem Drosselelement 7 ein vorgegebener Druck, der beispielsweise 5 bar betragen kann. In der Verbindungsleitung 17 ist weiterhin ein Rückschlagventil 18 vorgesehen,

Wenn dann ein Bremsdruck aufgebaut werden soll wird zunächst das Drosselelement 7 angesteuert. Über die Verbindungsleitung 17 und die Zulaufleitung 4 zur Kammer des Hauptbremszylinders 2 wird dann das entsprechende Volumen gefördert und der Druck entsprechend aufgebaut. Als nächster Schritt wird das Drosselelement 7 wieder in Durchlaßstellung geschaltet. Dabei wird auch das Aufteilelement 12 angesteuert sowie das Einstellelement 16. Es erfolgt dann ein weitergehender Aufbau von Bremsdruck entsprechend der Beschreibung im Zusammenhang mit der Figur 3. Bei der Ausgestaltung der Vorrichtung nach Figur 4 erweist es sich als vorteilhaft, daß zunächst der Druck von der hilfskraftunterstützten Lenkung verwendet werden kann, der sonst abgebaut würde. Erst wenn dieser Druck nicht ausreicht, wird weiterhin von der Druckseite der Pumpe 1 ein entsprechendes Volumen abgezweigt.

Bei allen beschriebenen Ausführungsbeispielen erweist es sich als vorteilhaft, wenn das Fahrzeug mit einem Antiblockiersystem 20 ausgerüstet ist. Da das Volumen in die Kammer des Hauptbremszylinders 2 gefördert wird, werden zunächst alle Radbremsen mit Bremsdruck beaufschlagt. Durch ein Antiblockiersystem kann der Bremsdruck an den einzelnen Rädern dann individuell eingestellt werden.

Dies ist bei vielen Anwendungen sinnvoll, wie beispielsweise einer Adaption des sich einstellenden Bremsdruckes an die Betätigung des Bremspedales durch den Fahrzeugführer, wie auch eine einstellbare Pedalweg-Verzögerungscharakteristik in Abhängigkeit von Vorwärts- und Rückwärtsfahrt des Fahrzeuges. Ebenso kann ein aktiver Eingriff in die Bremse eines Fahrzeuges in Abhängigkeit unterschiedlicher Bedingungen realisiert werden.

## Patentansprüche

1. Vorrichtung zur Erzeugung von Bremsdruck mittels einer Druckerzeugungsvorrichtung (1), die eine Pumpe (1) ist, wobei der von der Pumpe (1) aufgebaute Druck auch von wenigstens einem weiteren Aggregat (3) verwendet wird, dadurch gekennzeichnet, daß mittels der Pumpe (1) Volumen in die Kammer des Hauptbremszylinders (2) des Kraftfahrzeuges förderbar ist, indem die Zulaufleitung (4) zur Kammer des Hauptbremszylinders (2) an die Rücklaufleitung (5) des wenigstens einen weiteren Aggregates (3) gekoppelt ist, die das wenigstens eine weitere Aggregrat (3) mit dem Flüssigkeitsvorratsbehälter (6) verbindet, wobei zwischen der Ankopplung der Zulaufleitung (4) zur Kammer des Hauptbremszylinders (2) und dem Flüssigkeitsvorratsbehälter (6) ein zwischen wenigstens zwei Einstellungsmöglichkeiten beschaltbares Drosselelement (7) positioniert ist.

2. Vorrichtung nach Anspruch 1,
dadurch gekennzeichnet, daß das Drosselelement (7) mehr als zwei Einstellmöglichkeiten aufweist und zumindest entsprechend dem Wert eines Pedalwertgebers einstellbar ist.

3. Vorrichtung nach Anspruch 2,
dadurch gekennzeichnet, daß das Drosselelement (7) kontinuierlich einstellbar ist.

4. Vorrichtung nach Anspruch 1,
dadurch gekennzeichnet, daß das Drosselelement (7) eine Einstellung ohne Drosselung sowie eine weitere Einstellung mit einer bestimmten Drosselung aufweist, daß zwischen der Ankopplung der Zulaufleitung (4) zur Kammer des Hauptbremszylinders (2) an die Rücklaufleitung (5) des wenigstens einen weiteren Aggregates (3) und dem Hauptbremszylinder (2) in der Zulaufleitung (5) zur Kammer des Hauptbremszylinders (2) ein Ventil (8) angeordnet ist, das einen Druckabbau aus der Kammer des Hauptbremszylinders (2) in die Rücklaufleitung (5) des wenigstens einen weiteren Aggregates verhindert, und daß ein Verteilelement (9) vorgesehen ist, mittels dem die Kammer des Hauptbremszylinders 2 mit einem Flüssigkeitsvorratsbehälter (6) verbindbar ist.

5. Vorrichtung nach Anspruch 4,
dadurch gekennzeichnet, daß die verstellbare Drosselung zumindest entsprechend dem Wert eines Pedalwertgebers verstellbar ist.

6. Vorrichtung nach Anspruch 4 oder 5,
dadurch gekennzeichnet, daß das Drosselelement (7) aus einem 2/2-Wegeventil (10) besteht, das zum einen in ungedrosselte Durchlaßstellung und zum anderen in Sperrstellung schaltbar ist und daß diesem 2/2-Wegeventil (10) eine Drossel (11) mit konstanter Einstellung parallel geschaltet ist.

7. Vorrichtung zur Erzeugung von Bremsdruck mittels einer Druckerzeugungsvorrichtung (1), die eine Pumpe (1) ist, wobei der von der Pumpe (1) aufgebaute Druck auch von wenigstens einem weiteren Aggregat (3) verwendet wird, wobei auf der Druckseite der Pumpe (1) ein Aufteilelement (12) vorhanden ist, mittels dem der von der Pumpe (1) aufgebaute Druck auf das wenigstens eine weitere Aggregat (3) sowie das Bremssystem aufteilbar ist, dadurch gekennzeichnet, daß mittels der Pumpe (1) Volumen in die Kammer des Hauptbremszylinders (2) des Kraftfahrzeuges förderbar ist und daß das Aufteilelement (12) durch ein 3/2-Wegeventil oder ein 4/2-Wegeventil (13) gebildet wird, das in seiner einen Stellung (14) die Druckseite der Pumpe nur mit dem wenigstens einen weiteren Aggregat (3) verbindet und das in seiner anderen Stellung (15) sowohl das wenigstens eine weitere Aggregat (3) als auch die Kammer des Hauptbremszylinders (2) mit der Druckseite der Pumpe (1) verbindet.

8. Vorrichtung nach Anspruch 7,
dadurch gekennzeichnet, daß in der Zulaufleitung (4) zur Kammer des Hauptbremszylinders (2) ein Einstellelement (16) vorhanden ist, mittels dem der Zufluß zum Hauptbremszylinder (2) einstellbar ist und mittels dem die Kammer des Hauptbremszylinders (2) mit dem Flüssigkeitsvorratsbehälter (6) verbindbar ist.

9. Vorrichtung nach einem der Ansprüche 7 oder 8,
dadurch gekennzeichnet, daß in der Rücklaufleitung (5) des wenigstens einen weiteren Aggregates (3) zum Flüssigkeitsvorratsbehälter (6) ein wenigstens zwischen zwei Werten einstellbares Drosselelement (7) vorhanden ist, daß in Strömungsrichtung zum Flüssigkeitsvorratsbehälter (6) gesehen vor diesem Drosselelement (7) eine Verbindungsleitung (17) zur Zulaufleitung (4) zur Kammer des Hauptbremszylinders (2) abzweigt und daß in dieser Verbindungsleitung (17) ein Ventil (18) angeordnet ist, das einen Druckabbau aus der Kammer des Hauptbremszylinders in die Rücklaufleitung (5) des wenigstens einen weiteren Aggregates verhindert.

10. Vorrichtung nach einem der Ansprüche 1 bis 9,
dadurch gekennzeichnet, daß das Fahrzeug ein Antiblockiersystem (20) aufweist.

11. Vorrichtung nach einem der Ansprüche 1 bis 10,
dadurch gekennzeichnet, daß das wenigstens eine weitere Aggregat (3) eine hilfskraftunterstützte Lenkung ist.
